# EUROPÄISCHE PATENTSCHRIFT

(11) **EP 3 926 010 B1**
(45) Veröffentlichungstag und Bekanntmachung des Hinweises auf die Patenterteilung: **31.05.2023**
(21) Anmeldenummer: 21177988.9
(22) Anmeldetag: 07.06.2021
(51) Int. Cl.: C08L 21/00

(54) **ELEKTRISCH LEIT- ODER ABLEITFÄHIGE ELASTOMERSCHICHT MIT HELLEM ERSCHEINUNGSBILD**
ELECTRICALLY CONDUCTIVE ELASTOMER LAYER WITH BRIGHT APPEARANCE
COUCHE D'ÉLASTOMÈRE ÉLECTROCONDUCTRICE OU ÉLECTRODISSIPATRICE D'ASPECT LUMINEUX

(30) Priorität: 17.06.2020 DE 102020207497
(43) Veröffentlichungstag der Anmeldung: 22.12.2021
(73) Patentinhaber: ContiTech USA, Inc., Fairlawn, OH 44333 (US)
(72) Erfinder: Onken, Kristian, 30419 Hannover (DE)
(74) Vertreter: Continental Corporation

(56) Entgegenhaltungen:
- EP-A1- 2 103 856
- DE-A1-102017 223 546
- DE-A1-102018 115 503
- US-A1- 2017 213 616
- US-A1- 2018 292 030

## Beschreibung

Die vorliegende Erfindung betrifft ein elektrisch leit- oder ableitfähiges Material mit hellem Erscheinungsbild, das eine kontinuierliche Elastomermatrix und darin eingebundene elektrisch leit- oder ableitfähige Polymerpartikel umfasst. Entsprechende Materialien können zu elektrisch leit- oder ableitfähigen Schichten verarbeitet werden, in denen die elektrisch leit- oder ableitfähigen Polymerpartikel eine gewichtsbezogene mittlere Partikelgröße aufweisen, die kleiner oder gleich ist als die Schichtdicke der elektrisch leit- oder ableitfähigen Schicht. Die vorliegende Erfindung betrifft weiterhin Verfahren zur Herstellung solcher Schichten, Schläuche mit solchen Schichten und entsprechende Herstellungsverfahren, sowie die Verwendung von solchen Schläuchen z.B. in Lebensmittel- und Arzneimittelanwendungen.

### Stand der Technik

Für eine Vielzahl von industriellen Anwendungen, insbesondere in der Lebensmittel- und Pharmaindustrie, gibt es einen Bedarf nach elektrisch leit- und ableitfähigen Materialen mit hellem Erscheinungsbild, d.h. mit einem Erscheinungsbild, dass eine nicht einheitliche bzw. vollständig durchgängige schwarze Farbe aufweist. Dies hat den Hintergrund, dass in diesen Industriellen Bereichen hohe hygienische Anforderungen existieren, in denen die Farben Weiß, Hellgrau, Rot und Blau dominieren, die mit einer hohen Reinheit assoziiert werden. Vollständig schwarze Materialien können diesen Weißbereich z.B. durch Abrieb verunreinigen oder Verschmutzungen auf der Oberfläche nicht sichtbar werden lassen.

Die elektrische Leit- bzw. Ableitfähigkeit von Materialien ist insbesondere bei der Förderung von brennbaren oder explosiven Medien (wie Ethanol in Destillerien oder Zucker- und Mehlstäuben) wichtig, oder wenn Materialien in brennbaren oder explosiven Umgebungen (Ex-Bereich) eingesetzt werden. Durch die elektrische Leit- bzw. Ableitfähigkeit wird gewährleistet, dass es zu keiner elektrostatischen Aufladung des Materials kommt, die im schlimmsten Fall eine brennbare oder explosive Umgebung durch Funkenbildung zünden könnte.

Diese Anforderungen finden ihren Niederschlag in Regelwerken wie IEC TS 60079-32-1 und TRGS 727, die sich mit den elektrostatischen Gefahren in explosiven Atmosphären sowie der Vermeidung von Zündgefahren infolge elektrostatischer Aufladungen befassen.

In der Regel wird eine elektrische Leit- bzw. Ableitfähigkeit durch die Zugabe von elektrisch leitfähigem Ruß in das Material erzeugt. Je nach Rußmenge und Rußtyp lässt sich so die elektrische Leitfähigkeit des Materials bzw. der spezifische Widerstand (gemessen in Ωm (Ohm x m)) des Materials sehr genau einstellen. Zudem ist die elektrische Leit- bzw. Ableitfähigkeit durch Ruß dauerhaft (permanent) gewährleistet, d.h. diese verändert sich durch z.B. Migration oder äußere Einflüsse, wie Temperatur, UV-Strahlung oder Einwirkung von Chemikalien nicht signifikant.

Nachteilig an der Zugabe von Ruß in das Material ist jedoch, dass sich das Material durchgängig (d.h. über sein gesamtes Volumen) schwarz einfärbt und damit kein helles Erscheinungsbild mehr aufweist, das für Lebensmittel- oder pharmazeutische Anwendungen gewünscht ist. Auf Grund der hohen Färbekraft führt selbst die Zugabe von nur kleinen Russmengen zu einem einheitlich schwarzen Erscheinungsbild. Bei sehr kleinen Russmengen kann zudem eine ausreichende Leit- bzw. Ableitfähigkeit des Materials nicht mehr gewährleistet werden.

Eine im Stand der Technik beschriebene Möglichkeit zur Herstellung eines hellen und elektrisch leitfähigen Materials besteht in der Zugabe von leitfähigen Metallfasern (z.B. aus Edelstahl oder Kupfer) in das Material. Nachteilig daran ist allerdings, dass sich die Metallfasern (z.B. durch Abrieb) aus der Matrix lösen und in das geförderte Medium gelangen könnten. Zudem sind in vielen Lebensmittel- und Pharmaanwendungen Metallpartikel nicht erlaubt. Weiterhin nachteilig ist, dass eine zu hohe elektrische Leitfähigkeit des Materials in einigen Anwendungen problematisch sein kann, z.B. bei Verwendung in Schläuchen, in denen Streuströme auftreten können (s. TRGS 727 Seite 45 und IEC TS60076-32-1 Seite 16+63+69). Zudem kann z.B. Kupfer die Eigenschaften von Elastomeren negativ beeinflussen, in denen es als "Gummigift" wirken kann, während andere Metallfasern eine stark abrasive Wirkung auf verarbeitende Maschinen haben.

Eine weitere Möglichkeit der Herstellung eines hellen und elektrisch leitfähigen Materials besteht in der Zugabe von antistatischen Chemikalien ("Antistatika"), die dem Material eine gewisse elektrische Ableitfähigkeit vermitteln. Diese Chemikalien bestehen häufig aus sehr polaren Verbindungen wie z.B. Polyethylenglycolen, Na-Sulfonaten, Thioethern, Glycerinestern, speziellen Amin- und Alkylammonium-Verbindungen oder hygroskopischen Salzen (z.B. Li-Salze).

Nachteilig an diesen Chemikalien ist allerdings ihre meist nur geringe Wirksamkeit, so dass größere Mengen des Antistatikums erforderlich sind, um zumindest ein ableitfähiges Material (spezifischer Widerstand <10⁹ Ohm x m) zu erhalten. Eine höhere Einsatzmenge geht in der Regel mit größeren Veränderungen der physikalischen Eigenschaften des Materials einher, was in den allermeisten Fällen nicht gewünscht ist. Zusätzlich können polare Antistatika nicht problemlos in ein unpolareres Material eingebracht werden.

In DE102009044345 A1 und DE102015217698 A1 werden ionische Flüssigkeiten zur Herstellung eines hellen und elektrisch leit- bzw. ableitfähigen Materials beschrieben. Ionische Flüssigkeiten sind jedoch für Materialien mit Lebensmittelkontakt nicht zugelassen und können damit für entsprechende Applikationen nicht verwendet werden. Zudem können ionische Flüssigkeiten aufgrund ihrer Polarität in viele Basismaterialen nicht stabil integriert werden.

Eine noch weitere Möglichkeit zur Herstellung eines hellen und elektrisch leit- oder ableitfähigen Materials besteht in der Zugabe von oberflächig beschichteten Pigmenten auf Basis von Antimon/Zinn-Oxid. Auch diese dürfen jedoch nicht in Lebensmittelanwendungen eingesetzt werden und weisen zudem eine nur beschränkte Wirksamkeit auf.

Die EP 2 280 207 B1 beschreibt mehrschichtige Schläuche mit einer äußeren Schutz- und Verschleißschicht, deren Matrix aus einem elektrisch isolierenden Material besteht und die von diskreten, elektrisch leitenden Stegen durchbrochen wird. Diese Stege sind im Wesentlichen gleichmäßig in der Matrix verteilt und durchdringen die Schicht vollständig, so dass eine elektrische Durchgangsleitfähigkeit durch die Verschleißschicht ermöglicht wird. Als Material für die Verschleißschicht wird in der EP 2 280 207 B1 ultrahochmolekulares Polyethylen (UHMWPE) angegeben.

Nachteilig an diesem Material ist allerdings, dass die Flexibilität eines Elastomerschlauchs durch eine Beschichtung mit UHMWPE deutlich herabgesetzt wird, da der Kunststoff eine signifikante Eigensteifigkeit aufweist und somit der Schlauch selbst bei kleineren UHMWPE-Schichtstärken erheblich versteift wird. Darüber hinaus kann eine zu hohe elektrische Leitfähigkeit der Stege in einigen Anwendungen unerwünscht sein. Die EP1580475 A1 beschreibt antistatische Schläuche für Flüssigkeiten, bei denen Partikel eines isolierenden Materials in eine Matrix aus elektrisch leitfähigem Material eingebracht werden. Die entsprechenden Schläuche sollen sich durch einen reduzierten äußeren Reibungskoeffizienten und eine gute Widerstandsfähigkeit gegenüber chemischen Substanzen auszeichnen und leicht zu reinigen sein. Auch hier wird als Beispiel für das elektrisch leitfähige Material UHMWPE angegeben, in das zur Vermittlung einer ausreichenden Leitfähigkeit Russpartikel eingebracht werden.

Nachteilig an dieser Lösung ist wie in EP 2 280 207 B1 die hohe Eigensteifigkeit von UHMWPE, sowie die eingefärbte Matrix, die insgesamt ein deutlich dunkles Erscheinungsbild vermittelt.

Die EP 2 103 856 A1 beschreibt Schläuche mit einer elektrisch leitfähigen Innenschicht aus Fluorpolymer mit darin einbezogenen elektrisch leitfähigen Partikeln aus Ruß, Graphit und/oder Kohlenstoff-Nanotubes. Der Schlauch in EP 2 103 856 A1 kann aus Elastomeren gebildete weitere Schichten aufweisen, die ebenfalls zur Vermittlung von elektrischer Leitfähigkeit mit leitfähigen Partikeln modifiziert sein können.

Die DE 10 2018 115 503 A1 beschreibt Zusammensetzung zur Abschirmung von elektromagnetischer Strahlung, die einen leitfähigen Füllstoff und eine Polymermatrix mit einem harnstoffgruppenhaltigen Polyurethan aufweisen. Der elektrisch leitfähige Füllstoff in DE 10 2018 115 503 A1 ist aus einem elektrisch leitfähigen Polymer wie Polythiophen gebildet.

Vor dem Hintergrund des vorstehend beschriebenen Standes der Technik besteht ein Bedarf an einem elektrisch leit- oder ableitfähigen Material mit ausreichender Flexibilität, dass zum einen eine ausreichende elektrische Leit- oder Ableitfähigkeit, und zum anderen ein möglichst helles Erscheinungsbild aufweist. Zudem sollte das Material mit möglichst kostengünstigen Ausgangsmaterialein realisiert werden können, und in Bezug auf eine vom Anwender gewünschte elektrische Leitfähigkeit abstimmbar sein.

Die vorliegende Erfindung befasst sich mit diesem Bedarf.

### Detaillierte Beschreibung

Im Rahmen der dieser Erfindung zugrundeliegenden Untersuchungen wurde überraschend gefunden, dass sich diese Eigenschaften mit einem wie in Anspruch 1 angegebenen Material realisieren lassen.

Demzufolge betrifft die vorliegende Erfindung in einem ersten Aspekt ein elektrisch leit- oder ableitfähiges Material, dass eine kontinuierliche Elastomermatrix und darin eingebundene elektrisch leit- oder ableitfähige Polymerpartikel umfasst, wobei die elektrisch leit- oder ableitfähigen Polymerpartikel aus einem vernetzten Elastomer und Partikeln aus einer elektrisch leitfähigen Komponente gebildet sind. Durch die Verwendung eines Elastomermaterials als Matrix wird insgesamt ein ausreichend elastisches Material erhalten. Zudem kann, weil das Elastomer keine dunklen Russpartikel enthält, eine helle Oberfläche erzeugt werden.

Eine gewünschte elektrisch Leit- oder Ableitfähigkeit wird in dem beschrieben Material in erster Linie durch die eingebundenen elektrisch leit- oder ableitfähigen Polymerpartikel realisiert, die sich im Material zu Brücken aggregieren können, und so die elektrische Leitfähigkeit des Matrixmaterials erhöhen. Demnach weist das Elastomer, das die Matrix bildet, eine geringere elektrische Leitfähigkeit (bzw. entsprechend einen höheren spezifischen elektrischen Widerstand) auf als die eingebundenen elektrisch leit- oder ableitfähigen Polymerpartikel. Das Elastomer ist dabei elektrisch ableitfähig oder isolierend.

Im Gegensatz zu einer homogenen Verteilung von z.B. Ruß in einem Elastomer wird so der dunklere Farbeindruck vermieden, weil mindestens der überwiegende Anteil der Oberfläche eines aus dem Material gebildeten Gegenstandes durch die hellere Elastomermatrix gebildet wird. Hierbei erzeugen die elektrisch leit- oder ableitfähigen Polymerpartikel gezielt eine "inhomogene Verteilung" einer darin eingebundenen leitfähigen Komponente (wie z.B. Ruß), die sich in den Polymerpartikeln konzentriert. Dennoch ist der Anteil der Polymerpartikel im Material ausreichend hoch, damit eine gewünschte elektrische Leit- oder Ableitfähigkeit in einem breiten Bereich eingestellt werden kann.

Die Angabe "elektrisch leitfähig" bezeichnet im Kontext der vorliegenden Erfindung einen spezifischen Widerstand ("volume resistivity") von ≤ 10⁴ Ωm (Ohm x m, bestimmt gemäß ISO 14309:2019). "Elektrisch leitfähig" entspricht damit der in TRGS 727/2016 gegebenen Definition von elektrisch leitfähig. "Elektrisch ableitfähig" ist hingegen im hier beschriebenen Kontext ein Material mit einem spezifischen Widerstand im Bereich von > 10⁴ bis < 10⁹ Ωm (bestimmt gemäß ISO 14309:2019), was der Definition von "ableitfähig" in TRGS 727/2016 entspricht. Die Angabe "isolierend" bezeichnet im hier beschriebenen Kontext ein Material mit einem elektrischen Widerstand von ≥10⁹ Ωm (bestimmt gemäß ISO 14309:2019), was der Definition von "isolierend" nach TRGS 727/2016 entspricht.

Wie vorstehend erwähnt weist die Elastomermatrix eine elektrische Leitfähigkeit auf, die kleiner ist als die der eingebundenen elektrisch leit- oder ableitfähigen Polymerpartikel. In einer Ausführungsform ist die Elastomermatrix elektrisch ableitfähig und weist einen spezifischen elektrischen Widerstand im Bereich von > 10⁴ bis <10⁹ Ωm, bevorzugt > 10⁶ bis <10⁹ Ωm und weiter bevorzugt > 10⁷ bis <10⁹ Ωm auf. In einer anderen Ausführungsform ist die Elastomermatrix isolierend und weist einen spezifischen elektrischen Widerstand von ≥ 10⁹ Ωm und bevorzugt ≥ 10⁹ Ωm bis 10¹¹ Ωm auf.

Alternativ oder zusätzlich weist die Elastomermatrix zudem bevorzugt einen spezifischen elektrischen Widerstand auf, der um mindestens den Faktor 10³, bevorzugt mindestens den Faktor 10⁴ und noch weiter bevorzugt mindestens den Faktor 10⁵ größer ist als der spezifische elektrische Widerstand des Materials der elektrisch leit- oder ableitfähigen Polymerpartikel.

Die eingebundenen elektrisch leit- oder ableitfähigen Partikel sind bevorzugt unregelmäßig geformt oder kugelförmig, da sich solche Partikel relativ leicht (und ohne Nachbearbeitung) herstellen lassen, z.B. durch zerkleinern größerer Partikel. Kugelförmige Partikel können auch direkt z.B. durch Emulsionspolymerisationen in Anwesenheit des elektrisch leit- oder ableitfähigen Materials hergestellt werden.

Für die Bereitstellung einer wünschenswerten Kompatibilität von Elastomermatrix und elektrisch leit- oder ableitfähigen Polymerpartikeln enthalten die Polymerpartikel als Basispolymer ebenfalls ein Elastomer. Die elektrisch leitfähigen Polymerpartikel sind aus einem vernetzten Elastomer und Partikeln aus einem elektrisch leitfähigen Material gebildet, besonders bevorzugt handelt es sich bei dem die Elastomermatrix und dem die Polymerpartikel bildenden Material um Elastomere des gleichen Typs. Als besonders geeignete Elastomere für Elastomermatrix und elektrisch leit- oder ableitfähige Polymerpartikel können hierbei Ethylen-Propylen-DienKautschuk, Acrylnitril-Butadien-Kautschuk, NBR-PVC-Kautschuk, Naturkautschuk, Butyl-Kautschuk, halogenierter-Butyl-Kautschuk, Fluorkautschuk, Silicon-Kautschuk, Chloropren-Kautschuk, chlorierter PE-Kautschuk, chlorsulphoniertes Polyethylen, oder thermoplastisches Elastomer angegeben werden.

Die elektrisch leitfähige Komponente, die in die elektrisch leit- oder ableitfähigen Polymerpartikel einbezogen ist, kann aus jedem ausreichend aus sich heraus elektrisch leitfähigen Material, wie einem Metallpulver, gebildet sein, aus anwendungstechnischen Erwägungen ist es jedoch am zweckmäßigsten, wenn eine elektrisch leitfähige Komponente auf Basis von (elementarem) Kohlenstoff herangezogen wird. Auf Kohlenstoff basierende Materialien sind einerseits leicht und kostengünstig und weisen andererseits den Vorteil auf, dass sie im Gegensatz zu vielen organischen Materialien nicht migrieren. Besonders geeignete Materialien für die elektrisch leitfähige Komponente, die auf Kohlenstoff basieren, sind z.B. Ruß, Graphen, Kohlenstoffnanoröhren oder Fullerene, von denen Ruß am meisten bevorzugt ist.

Hinsichtlich des Anteils der elektrisch leit- oder ableitfähigen Polymerpartikel im elektrisch leit- oder ableitfähigen Material unterliegt die vorliegenden Erfindung keinen relevanten Beschränkungen, da sich die elektrische Leitfähigkeit des Materials sowohl über den Anteil der Polymerpartikel als auch deren elektrische Leitfähigkeit an sich beeinflussen lässt. Als grober Rahmen kann hier ein Anteil der elektrisch leit- oder ableitfähigen Polymerpartikel von ≤ 50%, bezogen auf das Gesamtgewicht der das elektrische leit- oder ableitfähige Material bildenden Materialien, angegeben werden. Der Mindestanteil der elektrisch leit- oder ableitfähigen Polymerpartikel ist in aller Regel so hoch, dass eine Leitfähigkeit von < 10⁹ Ωm erreicht wird. Als besonders geeigneter Gehaltsbereich kann ein Bereich von 0,5 bis 50 Gew.-% und/oder ≤ 30 Gew.-% angegeben werden.

Dem Fachmann ist in diesem Zusammenhang ersichtlich, das größere Partikel dann schon bei sehr geringen Konzentration eine höhere Leitfähigkeit vermitteln können, wenn die Partikelgröße in etwa der Schichtdicke des Materials entspricht. In diesem Fall stehen leitfähige Partikel mit beiden Oberflächen des Materials in Kontakt und Ladungen können über die Partikel leicht von einer auf die andere Seite geleitet werden. In einem solchen Fall kann schon eine sehr geringe Menge an Polymerpartikeln ausreichen, um dem Material insgesamt die gewünschte Leit- oder Ableitfähigkeit zu vermitteln. Zum Beispiel kann ein Gehalt von 0,2 bis 10 Gew.-% oder 0,5 bis 8 Gew.-% ausreichend sein. Bei Polymerpartikeln, die kleiner sind als die Schichtdicke des Materials, ist hingegen der Anteil der Polymerpartikel meistens höher, da sich die Partikel zu leitenden Brücken aggregieren müssen. In einem solchen Fall kann der Anteil der Polymerpartikeln z.B. im Bereich von 5 bis 40 Gew.-% oder 15 bis 40 Gew.-% liegen.

Wenn die Polymerpartikel aus einem Elastomer gebildet sind, können diese in geeigneter Weise durch verkleinern von größeren Polymerpartikeln oder -körpern hergestellt werden. Für ein solches Zerkleinern ist das Elastomer in den größeren Polymerpartikeln und in den daraus erzeugten kleineren Polymerpartikeln zweckmäßig vernetzt. Ein Zerkleinern kann beispielsweise durch Vermahlen der größeren Polymerpartikel realisiert werden, wobei das Elastomer zur Unterdrückung der elastomeren Eigenschaften auf eine geeignet niedrige Temperatur abgekühlt werden kann. Vorzugweise erfolgt ein solches Vermahlen unter kryogenen Bedingungen.

Das elektrisch leit- oder ableitfähige Material ist bevorzugt möglichst hell. Die Helligkeit von Körpern kann beispielsweise anhand des CIELAB-Farbraums angegeben werden, in dem der Helligkeitswert eine Farbe als Wert zwischen 0 (keine Helligkeit, schwarz) und 100 (volle Helligkeit, weiß) angegeben wird. Die CIELAB Helligkeit des erfindungsgemäßen elektrisch leitfähigen Materials ist in der Regel mindestens 5, insbesondere mindestens 10, weiter bevorzugt mindestens 15, noch weiter bevorzugt mindestens 25 und noch weiter bevorzugt mindestens 40. Die Helligkeit bestimmt sich nach DIN EN ISO 11664-4 (2011) und kann mit gängigen Farbmessgeräten bestimmt werden. Da die Helligkeit des erfindungsgemäßen Materials aufgrund der unterschiedlichen Helligkeit der Polymerpartikel und der Elastomermatrix inhomogen ist, bezeichnet die Helligkeit hier die gemittelte Helligkeit, z.B. über einen Bereich von 1 cm².

Das elektrisch leit- oder ableitfähige Material kann in einer bevorzugten Ausführungsform als elektrisch leit- oder ableitfähige Schicht vorliegen, wobei in einer solchen Schicht die elektrisch leit- oder ableitfähigen Polymerpartikel in einer Partikelgröße vorliegen können, die der Schichtdicke der Schicht entspricht (so dass sich die Partikel von einem Ende der Schicht bis zum anderen Ende der Schicht erstrecken), oder in einer Partikelgröße, die kleiner ist als die Schichtdicke der Schicht. Die mittlere Partikelgröße der Polymerpartikel ist bevorzugt kleiner ist als die Schichtdicke der Schicht, wobei die mittlere Partikelgröße die gewichtsbezogene mittlere Partikelgröße bezeichnet. Besonders bevorzugt ist die gewichtsbezogene mittlere Partikelgröße nicht größer als 50 % der Schichtdicke der Schicht, besonders bevorzugt nicht größer als 30 % und noch weiter bevorzugt nicht größer als 10 %. Die gewichtsbezogene mittlere Partikelgröße ist dabei, abhängig von der Größe der Partikel, mittels dem Fachmann bekannten Verfahren wie Siebanalyse oder Laserbeugung zu bestimmen.

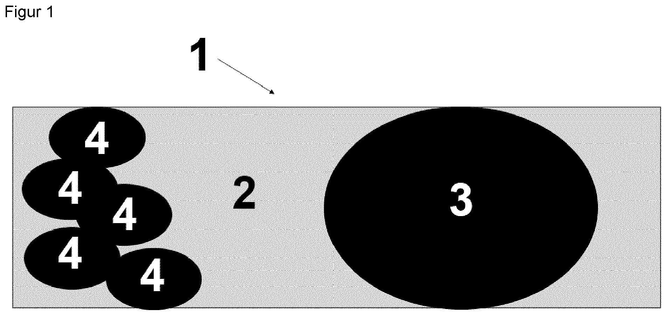

Ein Beispiel einer aus einem erfindungsgemäßen Material gebildeten Schicht ist in Figur 1 gezeigt. Die Schicht 1 besteht zu einem überwiegenden Anteil aus der Elastomermatrix 2, in die größere Partikel 3 und kleinere Partikel 4 eingebettet sind. Die größeren Partikel erstrecken sich über die gesamte Dicke der Schicht und generieren so Leitfähigkeit. Die Leitfähigkeit durch kleinere Partikel entsteht durch Brücken, die sich aus mehreren kleineren Partikeln bilden und die durchgängige Leitpfade durch die gesamte Elastomerschicht bilden.

Das erfindungsgemäße elektrisch leit- oder ableitfähige Material weist regelmäßig einen spezifischen Widerstand von < 10⁹ Ωm und bevorzugt im Bereich von > 10⁴ Ωm bis < 10⁹ Ωm auf (so dass das Material elektrisch ableitfähig ist), wobei ein spezifischer Widerstand im Bereich von 10⁵ Ωm bis < 10⁹ Ωm und insbesondere 10⁵ Ωm bis < 10⁷ Ωm als ganz besonders bevorzugt angegeben werden kann.

In einem weiteren Aspekt betrifft die vorliegende Erfindung ein Verfahren zur Herstellung einer elektrisch leit- oder ableitfähigen Schicht wie vorstehend beschrieben, wobei ein wie vorstehend beschriebenes elektrisch leit- oder ableitfähiges Material als Schicht ausgeformt wird. Bevorzugt werden im Rahmen des Verfahrens zunächst unregelmäßig geformte oder kugelförmige elektrisch leit- oder ableitfähige Polymerpartikel in ein Elastomermaterial eingeknetet, wobei auf konventionelle Vorrichtungen zurückgegriffen werden kann. Eine bevorzugte Vorrichtung zum Einkneten ist z.B. ein Kneter oder eine Walze. Anschließend wird das so erhaltene Gemischs zu einer Schicht geformt, wobei ebenfalls eine Walze oder ein Extruder zum Einsatz kommen kann.

Das Verfahren lässt sich zweckmäßig geeignet weiterbilden, indem dem Ausbilden einer Schicht ein Schritt angeschlossen wird, in dem das Elastomer der Matrix der gebildeten elektrisch leit- oder ableitfähigen Schicht gehärtet oder vulkanisiert wird. Zu diesem Zweck kann das Elastomer mit einem geeigneten Vernetzungsmittel oder Vernetzter modifiziert werden, der dem Elastomer vor dem Ausformen zu einer Schicht zugegeben wird.

Das erfindungsgemäße elektrisch leit- oder ableitfähige Material ist insbesondere für Anwendungen geeignet, in denen Ladungen, die z.B. durch elektrostatische Aufladung entstehen, abgeleitet werden müssen. Demzufolge betrifft ein noch weiterer Aspekt der vorliegenden Erfindung die Verwendung eines elektrisch leit- oder ableitfähigen Materials wie vorstehend beschrieben in Anwendungen wie insbesondere einem Schlauch, Förderband, Keilriemen, Schuh oder Chemikalienschutzanzug.

Ein noch weiterer Aspekt der vorliegenden Erfindung betrifft einen Schlauch, der eine elektrisch leit- oder ableitfähige Schicht, wie vorstehend beschrieben, umfasst. Die elektrisch leit- oder ableitfähige Schicht kann dabei die einzige Schicht des Schlauchs oder eine Schicht von mehreren Schichten des Schlauchs bilden. Bildet die Schicht eine von mehreren Schichten, so ist es weiterhin bevorzugt, wenn die Schicht die äußerste oder innerste Schicht des Schlauchs bildet, da in dieser Konfiguration elektrische Ladungen effektiv abgeleitet werden können während der Schlauch ein insgesamt helles Erscheinungsbild aufweist. In einer besonders bevorzugten Ausführungsform bildet die elektrisch leit- oder ableitfähige Schicht die äußerste Schicht eines mehrschichtigen Schlauchs. In einer weiteren besonders bevorzugten Ausführungsform bildet die elektrisch leitfähige Schicht mehrere Schichten oder sogar alle Schichten eines mehrschichtigen Schlauchs.

Ein noch weiterer Aspekt der vorliegenden Erfindung betrifft ein Verfahren zur Herstellung eines Schlauchs, wie vorstehend angegeben, dass mindestens die folgenden Schritte umfasst:
(i) Einkneten von elektrisch leit- oder ableitfähigen Polymerpartikeln in ein Elastomermaterial,
(ii) Formen einer Schlauchschicht aus dem in (i) erzeugten Gemisch, und
(iii) Aufbringen mindestens einer weiteren Schicht auf die in (ii) erzeugte Schlauchschicht oder Aufbringen der Schlauchschicht aus (ii) auf eine weitere Schlauchschicht.

Gemäß (ii) ist es demzufolge unerheblich, ob die aus dem elektrisch leit- oder ableitfähigen Material gebildete Schicht als letzte Schicht auf einen vorgefertigten Schlauch, der mehrschichtig sein kann, aufgebracht wird, oder ob die Schicht aus dem elektrisch leit- oder ableitfähigen Material als erste Schicht gebildet wird, auf die anschließend eine oder mehrere weitere Schlauchschichten aufgebracht werden. Ebenso sind Verfahren von der Erfindung eingeschlossen, in denen die elektrisch leit- oder ableitfähige Schicht eine mittlere Schicht in einem elektrisch leit- oder ableitfähigen Schlauch bildet, wobei sowohl unter als auch über dieser Schicht eine oder mehrere weitere Schichten angebracht sind.

Das Formen in Schritt (ii) des hier beschriebenen Verfahrens erfolgt bevorzugt mittels wickeln einer Platte oder Extrusion.

Im Rahmen des Verfahrens ist es bevorzugt, wenn z.B. im Anschluss an die Bildung der elektrisch leit- oder ableitfähigen Schicht oder des gesamten Schlauchs das Elastomer der Elastomermatrix einem Schritt des Vulkanisierens unterzogen wird.

Ein noch weiterer Aspekt betrifft die Verwendung eines Schlauchs oder eines durch ein Verfahren hergestellten Schlauchs, jeweils wie vorstehend angegeben, für Lebensmittel- oder Pharmaanwendungen, d.h. in Bereichen, in denen der Schlauch mit Lebensmitteln, pharmazeutischen Wirkstoffen (Arzneimitteln) oder Vorläufern davon, oder Substanzen, die in pharmazeutische Verabreichungsformen einbezogen werden, in Berührung kommt. Eine solche Berührung erfolgt in den meisten Fällen dadurch, dass die Lebensmittel oder Arzneimittel durch den Schlauch geleitet werden.

Durch das erfindungsgemäße elektrisch leit- oder ableitfähige Material lassen sich vielfältige Vorteile realisieren, die im Folgenden noch einmal zusammengefasst werden sollen:
Das erfindungsgemäße elektrisch leit- oder ableitfähige Material weist ein helles Erscheinungsbild und gleichzeitig eine gute elektrische Leit- und/oder Ableitfähigkeit auf. Durch die Variation des Anteils der elektrisch leit- oder ableitfähigen Polymerpartikel ist dabei eine genaue Einstellung einer gewünschten elektrischen Leit- oder Ableitfähigkeit möglich, wobei ein Abfall der Leifähigkeit über die Gebrauchszeit eines Artikels berücksichtigt werden kann.

Da als elektrisch leit- oder ableitfähiges Material nicht migrierende Materialien wie Ruß verwendet werden können, können Probleme mit konventionellen "flüchtigen" Antistatika und Metallfasern vermieden werden, die entsprechend bevorzugt nicht in den erfindungsgemäßen Materialen enthalten sind. Darüber hinaus kann das gesamte Material aus Elastomeren gebildet werden, so dass gute elastische Eigenschaften eingestellt werden können. Dadurch können auch dickere Schichtdicken unter Beibehaltung einer hohen Flexibilität hergestellt werden. Da für die Herstellung des Materials auf Ausgangstoffe mit Lebensmittelzulassung zurückgegriffen werden kann, ist eine Lebensmittelzulassung einer hergestellten Materialschicht problemlos möglich.

Im Folgenden wird die Erfindung anhand eines Ausführungsbeispiels näher illustriert, das jedoch nicht in irgendeiner Weise als beschränkend für den Schutzumfang der Anmeldung angesehen werden sollte.

### Beispiel:

Aus einer elektrisch leitfähigen ausvulkanisierten schwarzen EPDM-Platte (mit Leitruß; spezifischer Durchgangswiderstand 5,8 Ohm x m, bestimmt gemäß ISO 14309:2019 bei einer Probendicke von 1,11 m) wurden durch kryogenes Vermahlen schwarze Partikel mit einem Durchmesser im Bereich von ~0,3-1 mm hergestellt.

Mit diesen Partikeln wurden 1 mm Platten hergestellt, indem eine rote EPDM-Mischung (Matrix) auf einer Walze vorgelegt wurde und entsprechend der Vorgabe schwarze EPDM-Partikel hinzugefügt wurden. Nachdem die Partikel durch die Walze homogen in der Mischung verteilt waren, wurde ein 1mm Elastomerfell abgezogen. Dieses wurde in eine 1 mm Heizform gelegt und die Platte wurde in einer Vulkanisationspresse für 60 min bei 5 bar vulkanisiert.

Es wurden verschiedenen Testproben mit Gehalten von 20 bis 40 Gew.-% an schwarzen Partikeln und eine Vergleichsprobe ohne Partikel hergestellt. Für diese wurde anschließend der jeweilige spezifische Durchgangswiderstand (gemäß ISO 14309:2019 bestimmt. Die Ergebnisse dieser Messungen sind in der folgenden Tabelle 1 wiedergegeben.

**Tabelle 1:**

| **Probennummer** | | **1*** | **2** | **3** | **4** |
|---|---|---|---|---|---|
| Partikelanteil | % | 0 | 20 | 30 | 40 |
| el. Oberflächenwiderstand 1mm | Ω | 2,4E+08 | 9,9E+05 | 2,3E+05 | 1,5E+05 |
| Messspannung | V | 500 V | 100 V | 100 V | 100 V |
| spezifischer Durchgangswiderstand | Ωm | 1,5E+08 | 4,9E+05 | 1,6E+05 | 1,6E+05 |
| Messspannung | V | 100 V | 100 V | 10 V | 10 V |
| Probendicke | mm | 1,16 | 1,07 | 1,10 | 1,14 |

| | | | | | |
|---|---|---|---|---|---|
| * Referenzprobe | | | | | |

Aus Tabelle 1 ist ersichtlich, dass die Referenzplatte 1 einen hohen spezifischen Durchgangswiderstand aufweist, der bei Zugabe von elektrisch leitfähigen Partikeln signifikant gesenkt wird. Dadurch werden in den Proben 2 bis 4 elektrisch ableitfähige Platten erhalten. Die Platten weisen ein "gesprenkeltes" Aussehen auf, in dem abhängig von Partikelgehalt größere rote Bereiche ohne Verfärbung zu erkennen sind.

## Patentansprüche

1. Elektrisch leit- oder ableitfähiges Material umfassend eine kontinuierliche Elastomermatrix und darin eingebundene elektrisch leit- oder ableitfähige Polymerpartikel, wobei die elektrisch leit- oder ableitfähigen Polymerpartikel aus einem vernetzten Elastomer und Partikeln aus einer elektrisch leitfähigen Komponente gebildet sind.

2. Elektrisch leit- oder ableitfähiges Material nach Anspruch 1, **dadurch gekennzeichnet, dass** die kontinuierliche Elastomermatrix einen spezifischen elektrischen Widerstand im Bereich von > 10⁴ Ωm, und bevorzugt > 10⁴ bis < 10⁹ Ωm aufweist.

3. Elektrisch leit- oder ableitfähiges Material nach Anspruch 1 oder 2, **dadurch gekennzeichnet, dass** die Partikel aus einer elektrisch leitfähigen Komponente auf elementarem Kohlenstoff beruhen.

4. Elektrisch leit- oder ableitfähiges Material nach Anspruch 3, **dadurch gekennzeichnet, dass** die elektrisch leitfähige Komponente in Form von Ruß, Graphen, Kohlenstoffnanoröhren oder Fullerenen, bevorzugt in Form von Ruß vorliegt.

5. Elektrisch leit- oder ableitfähiges Material nach mindestens einem der Ansprüche 1 bis 4, **dadurch gekennzeichnet, dass** der Anteil der elektrisch leit- oder ableitfähigen Polymerpartikel ≤ 50%, bevorzugt 0,5 bis 50% und weiter bevorzugt ≤ 30%, des Gesamtgewichts der das elektrische leit- oder ableitfähige Material bildenden Materialien ausmacht.

6. Elektrisch leit- oder ableitfähiges Material nach mindestens einem der vorstehenden Ansprüche, **dadurch gekennzeichnet, dass** das Elastomer in der Elastomermatrix oder das Elastomer in den elektrisch leit- oder ableitfähigen Polymerpartikeln ein Elastomer ausgewählt aus Ethylen-Propylen-Dien-Kautschuk, Acrylnitril-Butadien-Kautschuk, NBR-PVC-Kautschuk, Naturkautschuk, Butyl-Kautschuk, halogenierterButyl-Kautschuk, Fluorkautschuk, Silicon-Kautschuk, Chloropren-Kautschuk, chlorierter PE-Kautschuk, chlorsulphoniertem Polyethylen, oder thermoplastischem Elastomer ist.

7. Elektrisch leit- oder ableitfähiges Material nach mindestens einem der vorstehenden Ansprüche, **dadurch gekennzeichnet, dass** unregelmäßig geformte elektrisch leit- oder ableitfähige Polymerpartikel in das Material einbezogen werden, die bevorzugt durch Vermahlen, insbesondere unter kryogenen Bedingungen, von größeren elektrisch leit- oder ableitfähigen Polymerpartikeln erzeugt werden.

8. Elektrisch leit- oder ableitfähiges Material nach mindestens einem der vorstehenden Ansprüche, **dadurch gekennzeichnet, dass** das Material einen relativen Helligkeitswert bestimmt gemäß dem CIELAB-Farbraum von mindestens 15, bevorzugt mindestens 25 und noch weiter bevorzugt mindestens 40 aufweist.

9. Elektrisch leit- oder ableitfähiges Material nach mindestens einem der vorstehenden Ansprüche, **dadurch gekennzeichnet, dass** es einen spezifischen elektrischen Widerstand im Bereich vonvon > 10⁴ Ωm bis < 10⁹ Ωm, bevorzugt 10⁵ Ωm bis < 10⁹ Ωm und weiter bevorzugt 10⁵ Ωm bis < 10⁷ Ωm aufweist.

10. Elektrisch leit- oder ableitfähiges Material nach mindestens einem der vorstehenden Ansprüche, **dadurch gekennzeichnet, dass** das Material zu einer Schicht ausgebildet ist und die elektrisch leit- oder ableitfähigen Polymerpartikel eine gewichtsbezogene mittlere Partikelgröße aufweisen, die kleiner ist als die Schichtdicke der Schicht.

11. Verfahren zur Herstellung einer elektrisch leit- oder ableitfähigen Schicht gemäß Anspruch 10, umfassend das Einkneten von unregelmäßig geformten oder kugelförmigen elektrisch leit- oder ableitfähigen Polymerpartikeln, bevorzugt mittels einer Walze, in ein Elastomermaterial und das Formen des so erhaltenen Gemischs zu einer Schicht.

12. Verfahren nach Anspruch 10, weiterhin umfassend das Härten oder Vulkanisieren der gebildeten elektrisch leit- oder ableitfähigen Schicht.

13. Verwendung eines elektrisch leit- oder ableitfähigen Materials gemäß einem der Ansprüche 1 bis 9 in einem Schlauch, Förderband, Keilriemen, Schuh oder Chemikalienschutzanzug.

14. Schlauch umfassend eine elektrisch leit- oder ableitfähige Schicht gemäß Anspruch 10, bevorzugt als äußere Schicht des Schlauchs.

15. Verfahren zur Herstellung eines Schlauchs nach Anspruch 14, umfassend die Schritte:
(i) Einkneten von elektrisch leit- oder ableitfähigen Polymerpartikeln in ein Elastomermaterial, wobei die elektrisch leit- oder ableitfähigen Polymerpartikel aus einem vernetzten Elastomer und Partikeln aus einer elektrisch leitfähigen Komponente gebildet sind,
(ii) Formen einer Schlauchschicht aus dem in (i) erzeugten Gemisch, und
(iii) Aufbringen mindestens einer weiteren Schicht auf die in (ii) erzeugte Schlauchschicht oder Aufbringen der Schlauchschicht aus (ii) auf eine weitere Schlauchschicht.

16. Verfahren nach Anspruch 15, weiterhin umfassend einen Schritt des Vulkanisierens des Elastomers der kontinuierlichen Elastomermatrix.

17. Verwendung eines Schlauchs gemäß Anspruch 14 oder eines durch ein Verfahren gemäß Anspruch 15 oder 16 hergestellten Schlauchs für Lebensmittel- oder Pharmaanwendungen, wobei bevorzugt ein Lebensmittel oder Arzneimittel, oder ein Ausgangsstoff für ein Lebensmittel oder Arzneimittel durch den Schlauch geleitet wird.

## Claims

1. Electrically conductive or dissipative material comprising a continuous elastomer matrix and electrically conductive or dissipative polymer particles incorporated therein, where the electrically conductive or dissipative polymer particles are formed from a crosslinked elastomer and particles of an electrically conductive component.

2. Electrically conductive or dissipative material according to Claim 1, **characterized in that** the continuous elastomer matrix has a specific electrical resistivity in the range of > 10⁴ Ωm, and preferably > 10⁴ Ωm to < 10⁹ Ωm.

3. Electrically conductive or dissipative material according to Claim 1 or 2, **characterized in that** the particles of an electrically conductive component are based on elemental carbon.

4. Electrically conductive or dissipative material according to Claim 3, **characterized in that** the electrically conductive component takes the form of carbon black, graphene, carbon nanotubes or fullerenes, preferably the form of carbon black.

5. Electrically conductive or dissipative material according to at least one of Claims 1 to 4, **characterized in that** the proportion of electrically conductive or dissipative polymer particles is ≤ 50%, preferably 0.5% to 50% and further preferably ≤ 30%, of the total weight of the materials that form the electrically conductive or dissipative material.

6. Electrically conductive or dissipative material according to at least one of the preceding claims, **characterized in that** the elastomer in the elastomer matrix or the elastomer in the electrically conductive or dissipative polymer particles is an elastomer selected from ethylene-propylene-diene rubber, acrylonitrile-butadiene rubber, NBR PVC rubber, natural rubber, butyl rubber, halogenated butyl rubber, fluoro rubber, silicone rubber, chloroprene rubber, chlorinated PE rubber, chlorosulfonated polyethylene, and thermoplastic elastomer.

7. Electrically conductive or dissipative material according to at least one of the preceding claims, **characterized in that** irregularly shaped electrically conductive or dissipative polymer particles are incorporated into the material, which are preferably produced by grinding, especially under cryogenic conditions, of larger electrically conductive or dissipative polymer particles.

8. Electrically conductive or dissipative material according to at least one of the preceding claims, **characterized in that** the material has a relative brightness value determined in the CIELAB colour space of at least 15, preferably at least 25 and even further preferably at least 40.

9. Electrically conductive or dissipative material according to at least one of the preceding claims, **characterized in that** it has a specific electrical resistivity in the range from > 10⁴ Ωm to < 10⁹ Ωm, preferably 10⁵ Ωm to < 10⁹ Ωm and further preferably 10⁵ Ωm to < 10⁷ Ωm.

10. Electrically conductive or dissipative material according to at least one of the preceding claims, **characterized in that** the material has been formed to a layer and the electrically conductive or dissipative polymer particles have an average particle size based on weight which is smaller than the layer thickness of the layer.

11. Process for producing an electrically conductive or dissipative layer according to Claim 10, comprising the kneading of irregularly shaped or spherical electrically conductive or dissipative polymer particles, preferably by means of a roller, into an elastomer material and the forming of the mixture thus obtained to a layer.

12. Process according to Claim 10, further comprising the curing or vulcanizing of the electrically conductive or dissipative layer formed.

13. Use of an electrically conductive or dissipative material according to any of Claims 1 to 9 in a hose, conveyor belt, V-ribbed belt, shoe or chemical protection suit.

14. Hose comprising an electrically conductive or dissipative layer according to Claim 10, preferably as outer layer of the hose.

15. Process for producing a hose according to Claim 14, comprising the steps of:
(i) kneading electrically conductive or dissipative polymer particles into an elastomer material, where the electrically conductive or dissipative polymer particles are formed from a crosslinked elastomer and particles of an electrically conductive component,
(ii) forming a hose layer from the mixture produced in (i), and
(iii) applying at least one further layer to the hose layer produced in (ii) or applying the hose layer from (ii) to a further hose layer.

16. Process according to Claim 15, further comprising the step of vulcanizing the elastomer of the continuous elastomer matrix.

17. Use of a hose according to Claim 14 or of a hose produced by a process according to Claim 15 or 16 for food or pharma applications, preferably involving passing of a food or medicament, or a starting material for a food or medicament, through the hose.

## Revendications

1. Matériau électriquement conducteur ou dissipatif comprenant une matrice élastomérique continue et des particules de polymère électriquement conductrices ou dissipatives intégrées dans celle-ci, les particules de polymère électriquement conductrices ou dissipatives étant formées à partir d'un élastomère réticulé et de particules composées d'un composant électriquement conducteur.

2. Matériau électriquement conducteur ou dissipatif selon la revendication 1, **caractérisé en ce que** la matrice élastomérique continue présente une résistance électrique spécifique dans la plage de > 10⁴ Ωm, et préférablement > 10⁴ à < 10⁹ Ωm.

3. Matériau électriquement conducteur ou dissipatif selon la revendication 1 ou 2, **caractérisé en ce que** les particules composées d'un composant électriquement conducteur sont à base de carbone élémentaire.

4. Matériau électriquement conducteur ou dissipatif selon la revendication 3, **caractérisé en ce que** le composant électriquement conducteur est présent sous forme de suie, de graphène, de nanotubes de carbone ou de fullerènes, préférablement sous forme de suie.

5. Matériau électriquement conducteur ou dissipatif selon au moins l'une quelconque des revendications 1 à 4, **caractérisé en ce que** la proportion des particules de polymère électriquement conductrices ou dissipatives représente ≤ 50 %, préférablement 0,5 à 50 % et plus préférablement ≤ 30 %, du poids total des matériaux formant le matériau électriquement conducteur ou dissipatif.

6. Matériau électriquement conducteur ou dissipatif selon au moins l'une quelconque des revendications précédentes, **caractérisé en ce que** l'élastomère dans la matrice élastomérique ou l'élastomère dans les particules de polymère électriquement conductrices ou dissipatives est un élastomère choisi parmi un caoutchouc d'éthylène-propylène-diène, un caoutchouc d'acrylonitrile-butadiène, un caoutchouc de NBR-PVC, un caoutchouc naturel, un caoutchouc de butyle, un caoutchouc de butyle halogéné, un caoutchouc fluoré, un caoutchouc de silicone, un caoutchouc de chloroprène, un caoutchouc de PE chloré, un polyéthylène chlorosulfoné, ou un élastomère thermoplastique.

7. Matériau électriquement conducteur ou dissipatif selon au moins l'une quelconque des revendications précédentes, **caractérisé en ce que** des particules de polymère électriquement conductrices ou dissipatives de forme irrégulière sont incorporées dans le matériau, qui sont générées de préférence par broyage, en particulier dans des conditions cryogéniques, de particules de polymère électriquement conductrices ou dissipatives plus grosses.

8. Matériau électriquement conducteur ou dissipatif selon au moins l'une quelconque des revendications précédentes, **caractérisé en ce que** le matériau présente une valeur de luminosité relative déterminée selon l'espace de couleur CIELAB d'au moins 15, préférablement d'au moins 25 et encore plus préférablement d'au moins 40.

9. Matériau électriquement conducteur ou dissipatif selon au moins l'une quelconque des revendications précédentes, **caractérisé en ce qu'**il présente une résistance électrique spécifique dans la plage de > 10⁴ Ωm à < 10⁹ Ωm, préférablement 10⁵ Ωm à < 10⁹ Ωm et plus préférablement 10⁵ Ωm à < 10⁷ Ωm.

10. Matériau électriquement conducteur ou dissipatif selon au moins l'une quelconque des revendications précédentes, **caractérisé en ce que** le matériau est formé en une couche et les particules de polymère électriquement conductrices ou dissipatives présentent une taille moyenne de particule en poids qui est plus petite que l'épaisseur de couche de la couche.

11. Procédé de préparation d'une couche électriquement conductrice ou dissipative selon la revendication 10, comprenant le pétrissage de particules de polymère électriquement conductrices ou dissipatives de forme irrégulière ou de forme sphérique, préférablement au moyen d'un rouleau, dans un matériau élastomérique et la mise en forme du mélange ainsi obtenu pour donner une couche.

12. Procédé selon la revendication 10, comprenant en outre le durcissement ou la vulcanisation de la couche électriquement conductrice ou dissipative formée.

13. Utilisation d'un matériau électriquement conducteur ou dissipatif selon l'une quelconque des revendications 1 à 9 dans un tuyau, une bande de transport, une courroie trapézoïdale, une chaussure ou un vêtement de protection contre des produits chimiques.

14. Tuyau comprenant une couche électriquement conductrice ou dissipative selon la revendication 10, préférablement en tant que couche extérieure du tuyau.

15. Procédé de préparation d'un tuyau selon la revendication 14, comprenant les étapes :
(i) pétrissage de particules de polymère électriquement conductrices ou dissipatives dans un matériau élastomérique, les particules de polymère électriquement conductrices ou dissipatives étant formées à partir d'un élastomère réticulé et de particules composées d'un composant électriquement conducteur,
(ii) mise en forme d'une couche pour tuyau à partir du mélange généré en (i), et
(iii) application d'au moins une couche supplémentaire sur la couche pour tuyau générée en (ii) ou application de la couche pour tuyau de (ii) sur une couche pour tuyau supplémentaire.

16. Procédé selon la revendication 15, comprenant en outre une étape de vulcanisation de l'élastomère de la matrice élastomérique continue.

17. Utilisation d'un tuyau selon la revendication 14 ou d'un tuyau préparé par un procédé selon la revendication 15 ou 16 pour des applications de produits alimentaires ou pharmaceutiques, préférablement un produit alimentaire ou un médicament, ou une matière première pour un produit alimentaire ou un médicament étant conduit à travers le tuyau.
